# EUROPÄISCHE PATENTANMELDUNG

(11) **EP 2 329 994 A1**
(43) Veröffentlichungstag der Anmeldung: **08.06.2011**
(21) Anmeldenummer: 10014695.0
(22) Anmeldetag: 17.11.2010
(51) Int. Cl.: B60R 21/0132

(54) **Kraftwagen mit einer Vorrichtung zum Erkennen eines Seitenaufpralls**

(30) Priorität: 02.12.2009 DE 102009056617
(71) Anmelder: Audi AG, 85045 Ingolstadt (DE)
(72) Erfinder: Weiss, Christian, 85113 Böhmfeld (DE)
(74) Vertreter: Thielmann, Frank

(57) **Zusammenfassung**

Die Erfindung betrifft einen Kraftwagen (30) mit einer Vorrichtung zum Erkennen eines Seitenaufpralls, mit einer zentral im Kraftwagen (30) angeordneten Steuereinheit (32), welcher integrierte Sensoren zum Ermitteln von in Richtung der Fahrzeuglängsachse und Fahrzeugquerachse wirkenden Beschleunigungen zugeordnet sind. Zusätzlich ist wenigstens ein weiterer Sensor (50) zum Ermitteln von in Fahrzeugquerrichtung wirkenden Kräften vorgesehen, der in Fahrzeugquerrichtung mittig im Kraftwagen (30) angeordnet ist. Damit können mit nur einem ausgelagerten Sensor zuverlässig Aufprallereignisse auf beiden Fahrzeugseiten detektiert werden, wodurch eine besonders kostengünstige Sensoranordnung geschaffen wird.

## Beschreibung

Die Erfindung betrifft einen Kraftwagen mit einer Vorrichtung zum Erkennen eines Seitenaufpralls nach dem Oberbegriff des Patentanspruchs 1.

Ein solcher Kraftwagen ist beispielsweise aus der DE 10 335 169 A1 bekannt. Um einen Seitenaufprall auf den Kraftwagen erkennen zu können, ist eine zentral im Kraftwagen angeordnete Steuereinheit vorgesehen. Diese weist Sensoren zum Ermitteln von in Richtung der Fahrzeuglängsachse und Fahrzeugquerachse wirkenden Beschleunigungen auf. Überschreiten solche Beschleunigungen einen vorgegebenen Schwellwert, so nimmt die Steuereinheit an, dass ein Unfall erfolgt ist, und löst in der Folge aktive Sicherheitssysteme des Kraftwagens, wie beispielsweise Airbags und Gurtstraffer aus. Um ein versehentliches Auslösen dieser Sicherheitssysteme zu vermeiden, umfasst eine solche Vorrichtung zum Erkennen einen Seitenaufpralls wenigstens einen weiteren Sensor zum Ermitteln von in Fahrzeugquerrichtung wirkenden Beschleunigungen, der im Bereich einer Fahrzeugseite angeordnet ist. Der Steuereinheit stehen damit zumindest zwei unabhängige Sensoren zur Verfügung. Vor dem Auslösen von aktiven Sicherheitssystemen können Messwerte dieser Sensoren miteinander verglichen werden. Erst bei Konsistenz zwischen Messwerten der unmittelbar der Steuereinheit zugeordneten Sensoren und des wenigstens einen ausgelagerten Sensors erfolgt eine Auslösung.

Aus dem Stand der Technik ist weiterhin bekannt, den wenigstens einen weiteren Sensor an besonders steifen Strukturen des Kraftwagens anzuordnen. So offenbart beispielsweise die DE 10 114 277 C1 ein Kraftwagen mit einer Vorrichtung gemäß dem Oberbegriff des Patentanspruchs 1, bei welcher der wenigstens eine weitere Sensor an Bauteilen am Fahrzeug angebracht ist, welche eine erhöhte Steifigkeit gegenüber Querdeformationen aufweisen, wie beispielsweise an einem Querträger.

Solche bekannten Vorrichtungen zum Erkennen eines Seitenaufpralls sind mit dem Nachteil behaftet, dass die weiteren Sensoren auf Grund ihrer Anordnung an besonders steifen Bauteilen des Kraftwagens erst dann hohe, in Fahrzeugquerrichtung wirkende Kräfte detektieren, wenn entweder das ganze Fahrzeug stark in diese Richtung beschleunigt wird, oder im unmittelbaren Bereich der weiteren Sensoren eine starke Deformation des Kraftwagens erfolgt. Diese Deformation im Bereich des Sensors erhöht allerdings das Risiko, dass der Sensor frühzeitig beschädigt wird und damit kein brauchbares Signal mehr liefert. Da gerade bei einem Seitenaufprall nur wenig Zeit zur Verfügung steht, um die Insassenschutzsysteme des Kraftwagens zu aktivieren, müssen solche Verzögerungen und Sensorbeschädigungen vermieden werden.

Als weitere Sensoren werden oftmals Drucksensoren verwendet, welche nicht direkt eine Beschleunigung, sondern eine Veränderung eines Drucks innerhalb eines Bauteils des Kraftwagens detektieren. Diese Sensoren liefern nur dann ein nutzbares Signal, wenn eine starke Deformation des jeweiligen Bauteils in Fall eines Unfalls stattfindet. In Unfallsituationen in denen das Bauteil nicht frühzeitig deformiert wird liefern diese Sensoren keinen Beitrag zur Schätzung der zu erwartenden Unfallschwere.

Der vorliegenden Erfindung liegt somit die Aufgabe zugrunde, einen Kraftwagen nach dem Oberbegriff von Patentanspruch 1 so weiter zu entwickeln, dass ein effizientes Erkennen eines Seitenaufpralls auf kostengünstige Weise ermöglicht wird. Diese Aufgabe wird durch einen Kraftwagen mit den Merkmalen des Patentanspruchs 1 gelöst.

Bei einem Kraftwagen mit den Merkmalen des Patentanspruchs 1 ist erfindungsgemäß vorgesehen, dass wenigstens ein weiterer Sensor in einem bezüglich der Fahrzeugquerrichtung mittleren Bereich des Kraftwagens angeordnet ist. Hierdurch wird eine besonders einfache Anordnung von Sensoren geschaffen, die dennoch in der Lage ist, zuverlässig Aufprallereignisse auf den Kraftwagen zu detektieren. Auf Grund der kurzen Signallaufzeit zwischen dem mittig angeordneten Sensor und der Steuereinheit und der Redudanz der Sensorinformationen wird eine besonders zuverlässige und robuste Auslösung von aktiven Sicherheitssystem durch die Steuereinheit sichergestellt. Durch die geringe Anzahl verwendeter Sensoren ist ein Kraftwagen mit einer derart ausgebildeten Vorrichtung zum Erkennen eines Seitenaufpralls gleichzeitig besonders kostengünstig.

Bereits in einer frühen Phase des Aufpralls sind die auf den wenigstens einen weiteren Sensor wirkenden Kräfte ein guter Indikator für die Schwere eines zu erwartenden Unfalls. Auf Grund von Messwerten des wenigstens einen weiteren Sensors kann die Steuereinheit daher angepasste Maßnahmen treffen, und beispielsweise bei leichteren Unfällen selektiv nur einen Teil der aktiven Sicherheitssysteme aktivieren. Entsprechend kann bei einer hohen zu erwartenden Unfallschwerte die Auslösung der Sicherheitssysteme so angepasst werden, dass auch in dieser Situation ein besonders guter Schutz für die Fahrzeuginsassen gewährleistet bleibt.

Durch den weiteren Sensor ist es weiterhin möglich, in Zusammenhang mit den Messwerten der Sensoren der Steuereinheit Informationen über die Rotation des Fahrzeugs um seine Hochachse zu gewinnen. Dies kann bei Frontunfällen genutzt werden, um den Winkel des Aufpralls eines Unfallgegners und die Überdeckung zum Unfallgegner, also den seitlichen Versatz der beiden Fahrzeuge bezüglich der Fahrzeugquerachsen, zu ermitteln. Durch die Steuereinheit kann das Auslösen der aktiven Sicherheitssysteme des Fahrzeugs dann an die so ermittelten Daten angepasst werden, um eine besonders hohe Sicherheit für die Fahrzeuginsassen zu gewährleisten.

In Kombination mit einem solchen Sensor kann wenigsten ein zweiter weiterer Sensor verwendet werden, um eine besonders zuverlässige Detektion von Aufprallereignissen zu ermöglichen. Bevorzugt ist der wenigstens eine zweite weitere Sensor als Beschleunigungssensor ausgebildet. Alternativ oder auch zusätzlich ist die Verwendung von Türdrucksensoren möglich

In einer weiteren bevorzugten Ausführungsform der Erfindung ist sowohl an einem Verstärkungsträger einer Fahrertür als auch an einem Verstärkungsträger einer Beifahrertür jeweils ein zweiter weiterer Sensor angeordnet. Anhand der Unterschiede der Messwerte der beiden weiteren Sensoren kann die genaue Richtung des Seitenaufpralls bestimmt werden und das Auslösen der aktiven Sicherheitssysteme entsprechend angepasst werden.

Die Verstärkungsträger von Fahrzeugtüren sind verglichen mit Säulen oder ähnlichen Bauteilen, an welchen weitere Sensoren bislang angebracht wurden, weniger steif, so dass bei einem Seitenaufprall auf den Kraftwagen bereits frühzeitig starke Beschleunigungskräfte auf den wenigstens einen weiteren Sensor einwirken. Damit wird eine besonders frühzeitige Erkennung eines Seitenaufpralls ermöglicht, so dass aktive Sicherheitssysteme des Kraftwagens, wie beispielsweise Airbags oder Gurtstraffer, besonders schnell ausgelöst werden können. Damit wird ein besonders guter Schutz von Fahrzeuginsassen im Falle eines solchen Seitenaufpralls gewährleistet.

Auch in Unfallsituationen, in denen die Türen nicht direkt getroffen werden, werden auf Grund der Lastpfade in der Karosserie des Kraftwagens Kräfte auf die Verstärkungsträger der Fahrzeugtüren ausgeübt. Ein an dem Verstärkungsträger angeordneter Sensor kann auch in einem solchen Fall zuverlässig den Seitenaufprall erkennen und zum rechtzeitigen Auslösen der aktiven Sicherheitssysteme beitragen.

Alternativ oder auch zusätzlich kann der wenigstens eine zweite weitere Sensor jedoch auch an einer B-Säule des Kraftwagens angeordnet werden. Durch die Anordnung des Sensors in einem nichtbeweglichen Teil des Kraftwagens wird die Belastung des Sensors und dessen Verkabelung im Normalbetrieb des Kraftwagens reduziert, so dass eine besonders gute Zuverlässigkeit und Robustheit gewährleistet ist.

Es ist darüber hinaus zweckmäßig, wenigstens einen dritten weiteren Sensor zum Ermitteln von in Fahrzeugquerrichtung wirkenden Beschleunigungen vorzusehen. Dieser ist bevorzugt an einer C-Säule des Kraftwagens angeordnet, wobei in einer ganz besonders bevorzugten Ausführungsform der Erfindung an beiden C-Säulen des Kraftwagens ein zweiter weiterer Sensor angeordnet ist. Hierdurch wird eine besonders gute Möglichkeit zum Feststellen der Richtung eines Seitenaufpralls geschaffen. Darüber hinaus können durch eine derartige Anordnung von Sensoren Aufprallereignisse zuverlässig über die gesamte Länge des Kraftwagens erfasst werden.

Alle geschilderten Positionen der zweiten und dritten weiteren Sensoren sind frei untereinander und mit dem mittig angeordneten weiteren Sensor kombinierbar. Im Rahmen der Erfindung können daher Sensoranordnungen für unterschiedlichste Anwendungsfälle geschaffen werden.

Im Folgenden soll die Erfindung und ihre Ausführungsformen anhand der Zeichnung näher erläutert werden:
- Fig. 1 bis 3: drei Kraftwagen mit alternativen Vorrichtungen zum Erkennen eines Seitenaufpralls nach dem Stand der Technik.
- Fig. 4: die Anordnung eines ausgelagerten Sensors in einem Kraftwagen gemäß Fig. 3 und
- Fig. 5: ein alternatives Ausführungsbeispiel eines erfindungsgemäßen Kraftwagens mit einer Vorrichtung zum Erkennen eines Seitenaufpralls.

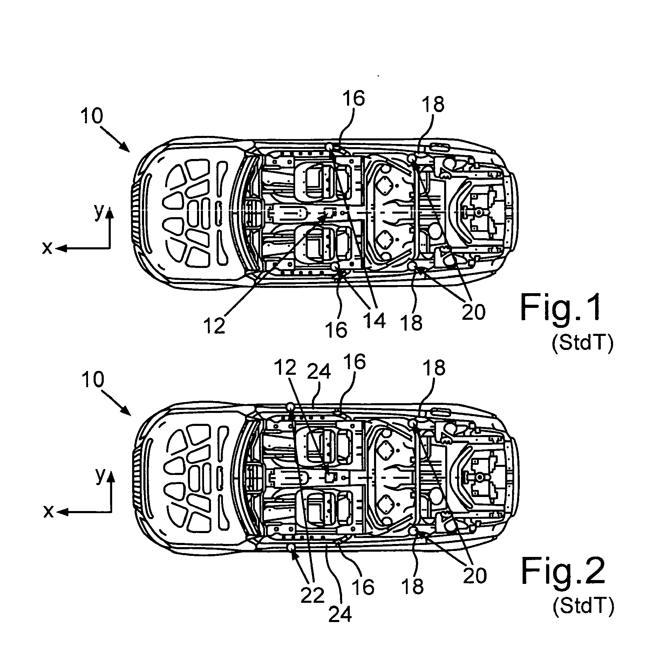

Fig. 1 zeigt einen im Ganzen mit 10 bezeichneten Kraftwagen mit einer aus dem Stand der Technik bekannten Vorrichtung zum Erkennen eines Seitenaufpralls. Die Vorrichtung umfasst ein Steuergerät 12, in welches Sensoren zur Bestimmung von Längs- und Querbeschleunigungen des Kraftwagens 10 integriert sind. Werden bestimmte vorgegebene von diesen Sensoren gemessene Beschleunigungswerte überschritten, so löst das Steuergerät 12 Insassenrückhaltsysteme des Kraftwagens 10 aus, wie beispielsweise Gurtstraffer, Frontairbags, Seitenairbags, Kopfairbags, aktive Überrollbügel und dergleichen.

Neben den im Steuergerät 12 vorgesehenen Sensoren sind im Kraftwagen 10 ausgelagerte Sensoren 14 vorgesehen, welche jeweils in einer B-Säule 16 des Kraftwagens 10 angeordnet sind. Auch in den C-Säulen 18 sind ausgelagerte Sensoren 20 vorgesehen. Durch das Steuergerät 12 werden die Messwerte der integrierten Sensoren sowie der ausgelagerten Sensoren 14 und 20 verglichen, wobei eine Auslösung der Insassenrückhaltesysteme nur erfolgt, wenn sowohl die Signale der ausgelagerten Sensoren als auch die Signale der in das Steuergerät 12 integrierten Sensoren vorgegebene Schwellwerte überschreitet. Damit wird verhindert, dass es auf Grund eines defekten Sensors zu einer unbeabsichtigten Airbagauslösung kommt.

Die in der Fig. 2 dargestellte, ebenfalls dem Stand der Technik entsprechenden Variante eines Kraftwagens 10 umfasst ebenfalls ein Steuergerät 12 sowie ausgelagerte Sensoren 20 in den C-Säulen 18. Im Gegensatz zu der in Fig. 1 dargestellten Variante ist in den B-Säulen 16 hier kein Sensor vorgesehen. Stattdessen sind Drucksensoren 22 in einem Innenraum der Fahrzeugtüren 24 aufgenommen. Kommt es zu einer seitlichen Kollision im Bereich einer Fahrzeugtür 24, so wird die Luft im Innenraum der jeweiligen Fahrzeugtür 24 komprimiert und der Drucksensor 22 spricht an.

Solche Drucksensoren 22 liefern jedoch nur dann Signale, wenn die jeweilige Fahrzeugtür 24 in einem Seitenunfall direkt getroffen und deformiert wird. Ist dies nicht der Fall, so können die Sensoren 22 den Unfall nicht detektieren. Solche Drucksensoren 22 sind zudem nachteilig teuer.

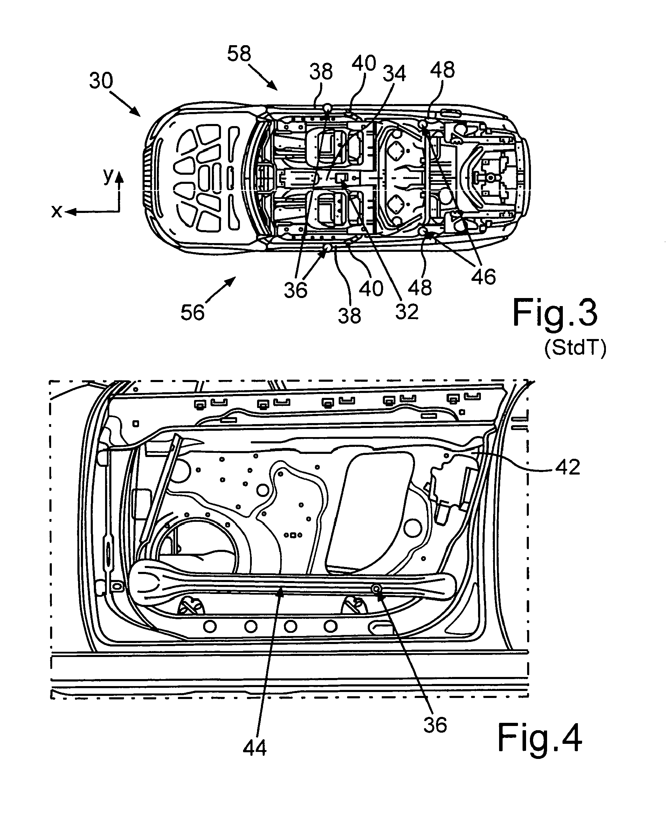

Fig. 3 zeigt ein weiteres Ausführungsbeispiel eines insgesamt mit 30 bezeichneten Kraftwagens nach dem Stand der Technik. Auch dieser umfasst ein Steuergerät 32, welches im Bereich einer Mitteltunnelstruktur 34 mit der Karosserie verbunden ist. Auch das Steuergerät 32 verfügt über interne Beschleunigungssensoren, um Beschleunigung in Fahrzeuglängs- und Fahrzeugquerrichtung festzustellen. Das Steuergerät 32 ist weiterhin mit ausgelagerten Sensoren 36 gekoppelt, welche in den Fahrzeugtüren 38 des Kraftwagens angeordnet sind. Die B-Säulen 40 weisen keine Sensoren auf.

Wie die Seitendarstellung eines Türinnenteils 42 in Fig. 4 zeigt, sind die Sensoren 36 an einem Seitenaufprallträger 44 des Türinnenteils 42 angeordnet. Der Seitenaufprallträger 44 dient zur Versteifung des Türinnenteils 42 im Falle eines Seitenaufpralls. Bei einem derartigen Seitenaufprall werden sofort Kräfte in den Seitenaufprallträger 44 eingeleitet, auch wenn die Fahrzeugtür 38 selbst nicht direkt getroffen wird. Bei den Sensoren 36 handelt es sich nicht um Drucksensoren, sondern um Beschleunigungssensoren. Diese sind wesentlich kostengünstiger als Drucksensoren. Gleichzeitig weisen sie ein vergleichbares oder schnelleres Ansprechverhalten auf. Das Signal wird daher bereits in einer sehr frühen Phase des Unfalls generiert, so dass durch die Steuereinheit 32 die Sicherheitseinrichtungen des Kraftwagens schnell aktiviert werden können. Die Signale der Sensoren 36 lassen sich der Schwere des bevorstehenden Unfalls zuordnen, so dass durch die Steuereinheit 32 ein angepasste Auslöseverhalten der Insassenrückhaltesysteme sichergestellt werden kann.

Neben den Beschleunigungssensoren 36 an den Seitenaufprallträgern 44 weist der Kraftwagen 30 gemäß Fig. 3 noch weitere ausgelagerte Sensoren 46 auf, welche in den C-Säulen 48 des Kraftwagens angeordnet sind. Damit ist es möglich, auch Aufprallereignisse, die weitab der Fahrzeugtüren 38 stattfinden, zu detektieren.

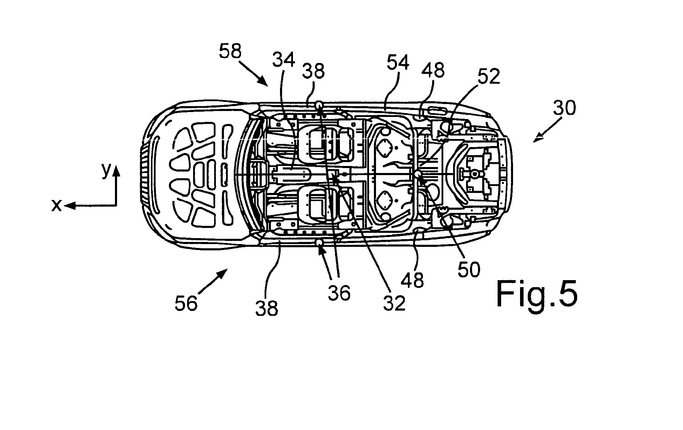

Figur 5 zeigt ein Ausführungsbeispiel eines erfindungsgemäßen Kraftwagens, der einen zentralen ausgelagerten Querbeschleunigungssensor 50 aufweist, welcher alle anderen bislang beschriebenen Sensoren ersetzen oder ergänzen kann. Der Sensor 50 befindet sich in Fahrzeugquerrichtung in etwa in der Mitte des Fahrzeugs. In Fahrzeuglängsrichtung ist der zentrale ausgelagerte Sensor 50 auf Höhe einer Rückwand 52 der Fahrgastzelle 54 angeordnet. Diese Position stellt jedoch nur eine Möglichkeit dar. Der Sensor 50 kann in Fahrzeuglängsrichtung frei positioniert werden. Der Kraftwagen gemäß Fig. 5 umfasst ferner ein Steuergerät 32 mit internen Längs- und Querbeschleunigungssensoren. Die in den Fahrzeugtüren 38 angeordnete Beschleunigungssensoren 36 sind lediglich optional, da bereits durch den Sensor 50 hinreichende Informationen bereitgestellt werden, um Aufprallereignisse zuverlässig zu detektieren.

Die Information aus dem zentralen ausgelagerten Sensor 50 kann benutzt werden, um eine Plausibilitätsprüfung vor einer Auslösung der Insassenrückhaltesysteme durch die Airbagsteuereinheit 32 zu beschleunigen. Durch einen einzigen Sensor 50 ist es dabei möglich, sowohl Aufprallereignisse auf einer Fahrerseite 56 als auch auf einer Beifahrerseite 58 des Kraftwagens zu detektieren.

Der zentrale ausgelagerte Sensor 50 kann darüber hinaus auch bei Frontalaufprallereignissen nützliche Informationen liefern. Zusammen mit den internen Sensoren der Airbagsteuereinrichtung 32 sowie den Sensoren 36 ist es möglich, Drehbewegungen des Kraftwagens um eine Fahrzeughochachse zu detektieren. Bei einem Frontalaufprall können diese Informationen genutzt werden, um einen Aufprallwinkel und eine Überdeckung der kollidierenden Fahrzeuge zu detektieren. Hierdurch ist es möglich, durch die Steuereinrichtung 32 Kopfairbags gezielt an die zu erwartende Beschleunigung der Fahrzeuginsassen angepasst auszulösen und so eine besonders hohe Sicherheit zu gewährleisten.

## Patentansprüche

1. Kraftwagen (30) mit einer Vorrichtung zum Erkennen eines Seitenaufpralls, mit einer zentral im Kraftwagen angeordneten Steuereinheit (32), welcher Sensoren zum Ermitteln von in Richtung der Fahrzeuglängsachse und Fahrzeugquerachse wirkenden Beschleunigungen zugeordnet sind, sowie wenigstens einem weiteren Sensor (50) zum Ermitteln von in Fahrzeugquerrichtung wirkenden Beschleunigungen, **dadurch gekennzeichnet, dass**
der wenigstens eine weitere Sensor (50) in einem bezüglich der Fahrzeugquerrichtung mittleren Bereich des Kraftwagens (30) angeordnet ist.

2. Kraftwagen (30) nach Anspruch 1,
**gekennzeichnet durch**
wenigstens einen zweiten weiteren Sensor (36) zum Ermitteln von in Fahrzeugquerrichtung wirkenden Kräften.

3. Kraftwagen (30) nach Anspruch 2,
**dadurch gekennzeichnet, dass**
der wenigstens eine zweite weitere Sensor (36) als Beschleunigungssensor oder als Drucksensor ausgebildet ist.

4. Kraftwagen (30) nach Anspruch 2 oder 3,
**dadurch gekennzeichnet, dass**
an einem Verstärkungsträger (44) einer Fahrertür (38) und an einem Verstärkungsträger (44) einer Beifahrertür (38) jeweils ein zweiter weiterer Sensor (36) angeordnet ist.

5. Kraftwagen (30) nach einem der Ansprüche 2 bis 4,
**dadurch gekennzeichnet, dass**
an wenigstens einer B-Säule (40) ein zweiter weiterer Sensor angeordnet ist.

6. Kraftwagen (30) nach einem der Ansprüche 2 bis 5,
**gekennzeichnet durch**
wenigstens einen dritten weiteren Sensor (46) zum Ermitteln von in Fahrzeugquerrichtung wirkenden Beschleunigungen.

7. Kraftwagen (30) nach einem der Ansprüche 2 bis 6,
**dadurch gekennzeichnet, dass**
der wenigstens eine dritte weitere Sensor (46) an einer C-Säule (48) des Kraftwagens (30) angeordnet ist.

8. Kraftwagen (30) nach Anspruch 7,
**dadurch gekennzeichnet, dass**
an beiden C-Säulen (48) des Kraftwagens (30) ein dritter weiterer Sensor (46) angeordnet ist.
